# EUROPEAN PATENT APPLICATION

(11) **EP 3 910 846 A1**
(43) Date of publication of application: **17.11.2021**
(21) Application number: 20305496.0
(22) Date of filing: 14.05.2020
(51) Int. Cl.: H04L 5/00, H04L 1/00, H04W 16/14, H04W 72/00

(54) **METHOD FOR CONTROL SIGNAL INTERPRETATION**

(71) Applicant: GUANGDONG OPPO MOBILE TELECOMMUNICATIONS CORP., LTD., Wusha, Chang'an Dongguan Guangdong 523860 (CN)
(72) Inventor: LIN, Hao, 92200 Neuilly-Sur-Seine (FR)
(74) Representative: Ipside

(57) **Abstract**

The present application discloses a method and apparatus for interpreting control signaling, devices and a storage medium, and relates to the field of radio communications. The method is performed in a terminal device, and the method comprises: receiving control signaling from a network device; and determining, according to a spectrum type corresponding to a carrier related to the control signaling, an interpretation method used to interpret the control signaling.

## Description

### Technical Field

The present application relates to the field of radio communications, and in particular to a method and apparatus for interpreting control signaling, devices, and a storage medium.

### Background Art

After receiving control signaling from a network device, a terminal device needs to interpret the control signaling by using a certain interpretation method, so as to determine an indication content corresponding to an information field in the control signaling.

In related technologies, the terminal device determines the interpretation method according to the format and scrambling method of the control signaling, and interprets the control signaling according to the interpretation method. In a new radio (NR) system, the format of the control signaling comprises: a downlink control information (DCI) format 0-0, a DCI format 0-1, etc.; and the scrambling method comprises: a temporary C-RNTI (TC-RNTI), a cell RNTI (C-RNTI), etc. If the format of the control signaling is different, then under different interpretation methods, the control signaling comprises different information fields, or the number of bits in the same information field is different. If the format of the control signaling is the same, but the scrambling method is different, then under different interpretation methods, the control signaling comprises different information fields, or the number of bits in the same information field is different.

### Summary of the Invention

The embodiments of the present application provide a method and apparatus for interpreting control signaling, devices, and a storage medium. A terminal device can determine, by determining a spectrum type corresponding to a carrier related to control signaling, a corresponding interpretation method according to the spectrum type, thereby ensuring that the terminal device can determine an accurate interpretation method. The technical solutions are as follows.

According to an aspect of the present application, a method for interpreting control signaling is provided, wherein the method is performed in a terminal device, and the method comprises:
receiving control signaling from a network device; and
determining, according to a spectrum type corresponding to a carrier related to the control signaling, an interpretation method used to interpret the control signaling.

According to an aspect of the present application, a method for interpreting control signaling is provided, wherein the method is performed in a network device, and the method comprises:
sending control signaling to a terminal device,
wherein the terminal device determines, according to a spectrum type corresponding to a carrier related to the control signaling, an interpretation method used to interpret the control signaling.

In some implementations, the spectrum type comprises: unshared spectrum or shared spectrum.

In some implementations, the network device is configured with multiple downlink carriers and/or multiple uplink carriers,
a first downlink carrier, being one of the multiple downlink carriers, is a downlink carrier used by the network device to send the control signaling;
a second downlink carrier, being one of the multiple downlink carriers, is a downlink carrier used by the network device to send a second transmission comprising a downlink transmission indicated by the control signaling; and
a first uplink carrier, being one of the multiple uplink carriers, is an uplink carrier used by the network device to receive a first transmission comprising an uplink transmission indicated by the control signaling,
wherein, the first downlink carrier, the second downlink carrier, and the first uplink carrier correspond to the same spectrum type; or, at least two of the first downlink carrier, the second downlink carrier, and the first uplink carrier correspond to different spectrum types.

In some implementations, the carrier related to the control signaling is a first downlink carrier that is a downlink carrier used by the network device to send the control signaling.

In some implementations, the interpretation method is used by the terminal device to interpret each information field in the control signaling.

In some implementations, the carrier related to the control signaling is a first uplink carrier,
wherein the first uplink carrier is an uplink carrier used by the network device to receive a first transmission comprising an uplink transmission indicated by the control signaling.

In some implementations, the interpretation method is used by the terminal device to interpret a first information field in the control signaling,
wherein the first information field comprises an information field related to the first transmission in the control signaling.

In some implementations, the first information field comprises at least one of:
a physical uplink shared channel (PUSCH) frequency domain resource allocation information field, and a channel access related information field.

In some implementations, the carrier related to the control signaling is a second downlink carrier,
wherein the second downlink carrier is a downlink carrier used by the network device to send a second transmission comprising a downlink transmission indicated by the control signaling.

In some implementations, the interpretation method is used by the terminal device to interpret a second information field in the control signaling,
wherein the second information field comprises an information field related to the second transmission in the control signaling.

In some implementations, the second information field comprises at least one of:
a system frame number related information field.

In some implementations, the first transmission comprises at least one of:
a PUSCH, a physical uplink control channel (PUCCH), a sounding reference signal (SRS), and a physical random access channel (PRACH).

In some implementations, the second transmission comprises at least one of:
a physical downlink shared channel (PDSCH), a physical downlink control channel (PDCCH), and a CSI reference signal (CSI-RS).

In some implementations, the control signaling comprises at least one of:
an uplink grant (UL grant) in a random access response (RAR), a DCI format 0_0, a DCI format 0_1, a DCI format 0_2, a DCI format 1_0, a DCI format 1_1, a DCI format 1_2, and a DCI format 2_3.

In some implementations, scrambling codes of the DCI format 0_0, the DCI format 0_1, the DCI format 0_2, the DCI format 1_0, the DCI format 1_1, the DCI format 1_2, and the DCI format 2_3 comprise at least one of:
a random access RNTI (RA-RNTI), a temporary C-RNTI (TC-RNTI), a cell RNTI (C-RNTI), a configured scheduling RNTI (CS-RNTI), a modulation and coding scheme cell RNTI (MCS-C-RNTI), a transmit power control sounding reference signal RNTI (TPC-SRS-RNTI), and a message B RNTI (msg-B-RNTI).

According to an aspect of the present application, an apparatus for interpreting control signaling is provided, the apparatus comprising: a receiving module and a determining module,
the receiving module being configured to receive control signaling from a network device; and
the determining module being configured to determine, according to a spectrum type corresponding to a carrier related to the control signaling, an interpretation method used to interpret the control signaling.

In some implementations, the apparatus is performed in a terminal device, and the apparatus comprises: a receiving module and a determining module,
the receiving module being configured to receive control signaling from a network device; and
the determining module being configured to determine, according to a spectrum type corresponding to a carrier related to the control signaling, an interpretation method used to interpret the control signaling.

In some implementations, the spectrum type corresponding to the carrier related to the control signaling comprises: unshared spectrum or shared spectrum.

In some implementations, the terminal device is configured with multiple downlink carriers and/or multiple uplink carriers,
a first downlink carrier, being one of the multiple downlink carriers, is a downlink carrier used by the terminal device to receive the control signaling;
a second downlink carrier, being one of the multiple downlink carriers, is a downlink carrier used by the terminal device to receive a second transmission comprising a downlink transmission indicated by the control signaling; and
a first uplink carrier, being one of the multiple uplink carriers, is an uplink carrier used by the terminal device to send a first transmission comprising an uplink transmission indicated by the control signaling,
wherein, the first downlink carrier, the second downlink carrier, and the first uplink carrier correspond to the same spectrum type; or, at least two of the first downlink carrier, the second downlink carrier, and the first uplink carrier correspond to different spectrum types.

In some implementations, the carrier related to the control signaling is a first downlink carrier that is a downlink carrier used by the network device to send the control signaling.

In some implementations, the apparatus further comprises: an interpretation module,
the interpretation module being configured to interpret each information field in the control signaling by using the interpretation method.

In some implementations, the carrier related to the control signaling is a first uplink carrier,
wherein the first uplink carrier is an uplink carrier used by the terminal device to send a first transmission comprising an uplink transmission indicated by the control signaling.

In some implementations, the apparatus further comprises: an interpretation module,
the interpretation module being configured to interpret a first information field in the control signaling by using the interpretation method,
wherein the first information field comprises an information field related to the first transmission in the control signaling.

In some implementations, the first information field comprises at least one of:
a physical uplink shared channel (PUSCH) frequency domain resource allocation information field, and a channel access related information field.

In some implementations, the carrier related to the control signaling is a second downlink carrier,
wherein the second downlink carrier is a downlink carrier used by the terminal device to receive a second transmission comprising a downlink transmission indicated by the control signaling.

In some implementations, the apparatus further comprises: an interpretation module,
the interpretation module being configured to interpret a second information field in the control signaling by using the interpretation method,
wherein the second information field comprises an information field related to the second transmission in the control signaling.

In some implementations, the second information field comprises at least one of:
a system frame number related information field.

In some implementations, the first transmission comprises at least one of:
a PUSCH, a physical uplink control channel (PUCCH), a sounding reference signal (SRS), and a physical random access channel (PRACH).

In some implementations, the second transmission comprises at least one of:
a physical downlink shared channel (PDSCH), a physical downlink control channel (PDCCH), and a CSI reference signal (CSI-RS).

In some implementations, the control signaling comprises at least one of:
an uplink grant (UL grant) in a random access response (RAR), a DCI format 0_0, a DCI format 0_1, a DCI format 0_2, a DCI format 1_0, a DCI format 1_1, a DCI format 1_2, and a DCI format 2_3.

In some implementations, scrambling codes of the DCI format 0_0, the DCI format 0_1, the DCI format 0_2, the DCI format 1_0, the DCI format 1_1, the DCI format 1_2, and the DCI format 2_3 comprise at least one of:
a random access RNTI (RA-RNTI), a temporary C-RNTI (TC-RNTI), a cell RNTI (C-RNTI), a configured scheduling RNTI (CS-RNTI), a modulation and coding scheme cell RNTI (MCS-C-RNTI), a transmit power control sounding reference signal RNTI (TPC-SRS-RNTI), and a message B RNTI (msg-B-RNTI).

According to an aspect of the present application, an apparatus for interpreting control signaling is provided, the apparatus comprising: a sending module,
the sending module being configured to send control signaling to a terminal device,
wherein the terminal device determines, according to a spectrum type corresponding to a carrier related to the control signaling, an interpretation method used to interpret the control signaling.

In some implementations, the spectrum type comprises:
unshared spectrum or shared spectrum.

In some implementations, the network device is configured with multiple downlink carriers and/or multiple uplink carriers,
a first downlink carrier, being one of the multiple downlink carriers, is a downlink carrier used by the network device to send the control signaling;
a second downlink carrier, being one of the multiple downlink carriers, is a downlink carrier used by the network device to send a second transmission comprising a downlink transmission indicated by the control signaling; and
a first uplink carrier, being one of the multiple uplink carriers, is an uplink carrier used by the network device to receive a first transmission comprising an uplink transmission indicated by the control signaling,
wherein, the first downlink carrier, the second downlink carrier, and the first uplink carrier correspond to the same spectrum type; or, at least two of the first downlink carrier, the second downlink carrier, and the first uplink carrier correspond to different spectrum types.

In some implementations, the carrier related to the control signaling is a first downlink carrier that is a downlink carrier used by the network device to send the control signaling.

In some implementations, the interpretation method is used by the terminal device to interpret each information field in the control signaling.

In some implementations, the carrier related to the control signaling is a first uplink carrier,
wherein the first uplink carrier is an uplink carrier used by the network device to receive a first transmission comprising an uplink transmission indicated by the control signaling.

In some implementations, the interpretation method is used by the terminal device to interpret a first information field in the control signaling,
wherein the first information field comprises an information field related to the first transmission in the control signaling.

In some implementations, the first information field comprises at least one of:
a physical uplink shared channel (PUSCH) frequency domain resource allocation information field, and a channel access related information field.

In some implementations, the carrier related to the control signaling is a second downlink carrier,
wherein the second downlink carrier is a downlink carrier used by the network device to send a second transmission comprising a downlink transmission indicated by the control signaling.

In some implementations, the interpretation method is used by the terminal device to interpret a second information field in the control signaling,
wherein the second information field comprises an information field related to the second transmission in the control signaling.

In some implementations, the second information field comprises at least one of:
a system frame number related information field.

In some implementations, the first transmission comprises at least one of:
a PUSCH, a physical uplink control channel (PUCCH), a sounding reference signal (SRS), and a physical random access channel (PRACH).

In some implementations, the second transmission comprises at least one of:
a physical downlink shared channel (PDSCH), a physical downlink control channel (PDCCH), and a CSI reference signal (CSI-RS).

In some implementations, the control signaling comprises at least one of:
an uplink grant (UL grant) in a random access response (RAR), a DCI format 0_0, a DCI format 0_1, a DCI format 0_2, a DCI format 1_0, a DCI format 1_1, a DCI format 1_2, and a DCI format 2_3.

In some implementations, scrambling codes of the DCI format 0_0, the DCI format 0_1, the DCI format 0_2, the DCI format 1_0, the DCI format 1_1, the DCI format 1_2, and the DCI format 2_3 comprise at least one of:
a random access RNTI (RA-RNTI), a temporary C-RNTI (TC-RNTI), a cell RNTI (C-RNTI), a configured scheduling RNTI (CS-RNTI), a modulation and coding scheme cell RNTI (MCS-C-RNTI), a transmit power control sounding reference signal RNTI (TPC-SRS-RNTI), and a message B RNTI (msg-B-RNTI).

According to an aspect of the present application, a terminal device is provided, the terminal device comprising: a processor; a transceiver connected to the processor; and a memory for storing executable instructions of the processor, wherein the processor is configured to load and execute the executable instructions to implement the method for interpreting control signaling according to the above-mentioned aspects.

According to an aspect of the present application, a network device is provided, the network device comprising: a processor; a transceiver connected to the processor; and a memory for storing executable instructions of the processor, wherein the processor is configured to load and execute the executable instructions to implement the method for interpreting control signaling according to the above-mentioned aspects.

According to an aspect of the present application, a computer-readable storage medium is provided, wherein the readable storage medium stores executable instructions which are loaded and executed by the processor to implement the method for interpreting control signaling according to the above-mentioned aspects.

The technical solutions provided by the embodiments of the present application comprise at least the following beneficial effects:
After receiving the control signaling, the terminal device can determine, by determining the spectrum type corresponding to the carrier related to the control signaling, the corresponding interpretation method according to the spectrum type in the case where different spectrum types correspond to different interpretation methods, thereby ensuring that the terminal device can determine an accurate interpretation method, so as to achieve correct interpretation of the control signaling according to this interpretation method.

### Brief Description of the Drawings

In order to illustrate the technical solutions in the embodiments of the present application more clearly, a brief introduction to the drawings required for the embodiments will be provided below. Obviously, the drawings in the following description are merely some of the embodiments of the present application, and those of ordinary skill in the art would also have been able to obtain other drawings according to these drawings without any creative effort.
FIG. 1 is a schematic diagram of a supplementary uplink provided by an exemplary embodiment of the present application;
FIG. 2 is a block diagram of a communication system provided by an exemplary embodiment of the present application;
FIG. 3 is a flowchart of a method for interpreting control signaling provided by an exemplary embodiment of the present application;
FIG. 4 is a flowchart of a method for interpreting control signaling provided by an exemplary embodiment of the present application;
FIG. 5 is a flowchart of a method for interpreting control signaling provided by an exemplary embodiment of the present application;
FIG. 6 is a flowchart of a method for interpreting control signaling provided by an exemplary embodiment of the present application;
FIG. 7 is a structural block diagram of an apparatus for interpreting control signaling provided by an exemplary embodiment of the present application;
FIG. 8 is a structural block diagram of an apparatus for interpreting control signaling provided by an exemplary embodiment of the present application; and
FIG. 9 is a schematic structural diagram of a communication device according to an exemplary embodiment of the present application.

### Detailed Description of Embodiments

In order to make the purposes, technical solutions and advantages of the present application clearer, embodiments of the present application will be described below in further details with reference to the accompanying drawings.

First, a brief introduction to the nouns involved in the embodiments of the present application is as follows:
**NR-based shared spectrum:** It is a spectrum allocated by the country and region for communications of a radio device. This spectrum is generally considered as a shared spectrum (also called unlicensed spectrum), that is, as long as communication devices in different communication systems meet the regulations set by the country or region on this spectrum, this spectrum can be used without applying for a proprietary spectrum license from the government.
**Spectrum type:** It is the type of spectrum where the carrier is located, which is determined according to a certain division method. Alternatively, the spectrum type comprises: shared spectrum and unshared spectrum.
**Interpretation method:** The interpretation method is a method for a terminal device to determine the indication content corresponding to the information field in the control signaling. The interpretation method comprises a division method for at least one information field, and a meaning represented by the bit information.
**Supplementary uplink:** NR supports the supplementary uplink (SUL) technology.

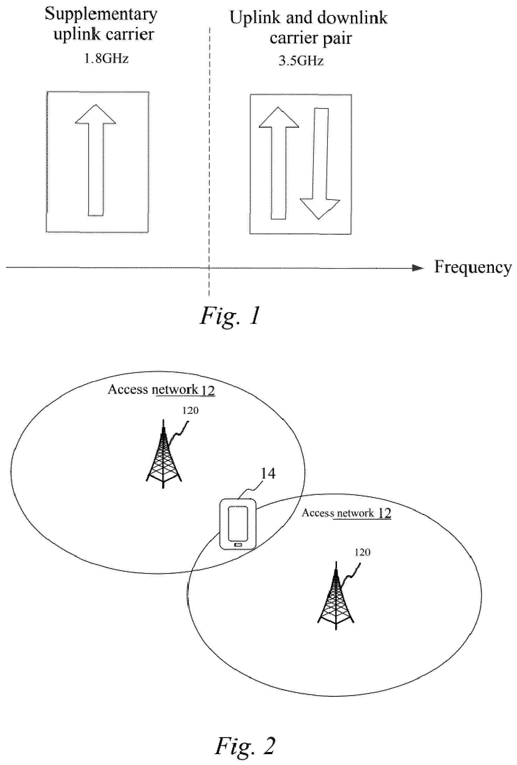

With reference to FIG. 1, a conventional carrier pair (including an uplink (UL) carrier and a downlink (DL) carrier) will have an associated or supplementary uplink carrier (i.e., an SUL carrier). This SUL carrier is generally deployed at a low frequency. For example, if a carrier pair works at the 3.5 GHz band, a 1.8 GHz SUL carrier will be configured.

The main purpose of the supplementary uplink is to extend uplink coverage, and to increase the uplink rate in power-constrained areas by using low-frequency carriers. In addition, the uplink bandwidth of a non-supplementary uplink carrier is much larger than that of an SUL carrier. In this way, when the quality of radio is relatively good, for example, the terminal device is very close to a network device, the terminal device may obtain a high rate by using a non-supplemented uplink carrier, while when the quality of radio decreases, since the path loss of the low-frequency carrier is small, the terminal device may obtain a higher rate than that of the non-complementary carrier by using an SUL carrier at a low frequency.

The spectrum types of the above UL carrier, DL carrier and SUL carrier are random. Examples are: the UL carrier and the DL carrier are in the shared spectrum, and the SUL carrier is in the unshared spectrum; the UL carrier, the DL carrier, and the SUL carrier are in the shared spectrum; and the UL carrier and the SUL carrier are in the unshared spectrum, and the DL carrier is in the shared spectrum.

FIG. 2 shows a block diagram of a communication system provided by an exemplary embodiment of the present application, wherein this communication system may comprise: an access network 12 and a terminal device 14.

The access network 12 comprises several network devices 120. The network device 120 may be a base station, which is an apparatus deployed in an access network to provide radio communication functions for terminals. The base station may comprise various forms of macro base stations, micro base stations, relay stations, access points, and so on. In systems using different radio access technologies, the names of a device with the base station function may be different. For example, in an LTE system, it is called eNodeB or eNB; and in a 5G NR-U system, it is called gNodeB or gNB. As the communication technology evolves, the description of "base station" may change. For convenience in the embodiments of the present application, the above-mentioned apparatuses that provide radio communication functions for the terminal device 14 are collectively referred to as network devices.

The terminal device 14 may comprise various hand-held devices, in-vehicle devices, wearable devices and computing devices with radio communication functions, or other processing devices connected to radio modems, as well as various forms of user equipment, mobile stations (MS), terminal devices, and so on. For convenience of description, the devices mentioned above are collectively referred to as terminals. The network device 120 and the terminal device 14 communicate with each other through a certain radio technology, such as a Uu interface.

The technical solutions in the embodiments of the present application may be performed to various communication systems, for example: a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, an Advanced Long Term Evolution (LTE-A) system, a New Radio (NR) system, an evolved system of the NR system, an LTE-based access to Unlicensed spectrum (LTE-U) system, an NR-U system, a Universal Mobile Telecommunication System (UMTS), a Worldwide Interoperability for Microwave Access (WiMAX) communication system, a Wireless Local Area Network (WLAN), Wireless Fidelity (WiFi), a next-generation communication system or other communication systems, etc.

In general, the number of connections supported by the conventional communication system is limited and the connections are also easy to implement. However, with the development of communication technologies, mobile communication systems will not only support conventional communications, but also support, for example, Device to Device (D2D) communications, Machine to Machine (M2M) communications, Machine Type Communications (MTC), Vehicle to Vehicle (V2V) communications, Vehicle to Everything (V2X) systems, etc. The embodiments of the present application may also be performed to these communication systems.

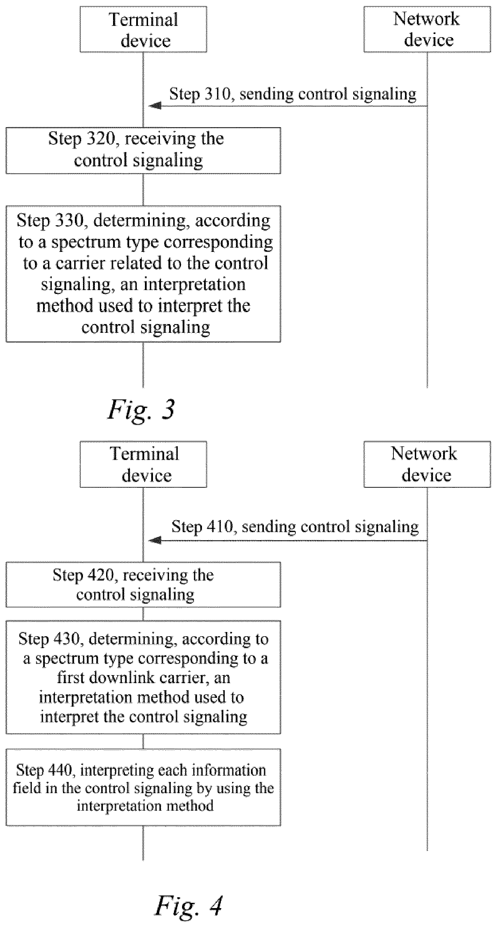

FIG. 3 shows a flowchart of a method for interpreting control signaling provided by an exemplary embodiment of the present application. This method may be performed in the terminal device and the network device as shown in FIG. 2. This method comprises:
Step 310, the network device sends control signaling to the terminal device.

The control signaling is signaling used by the network device to indicate the terminal device. Alternatively, the content of control signaling includes but is not limited to: at least one of downlink scheduling allocation, uplink scheduling authorization, preemption indication, and power control.

Step 320, the terminal device receives the control signaling.

The terminal device receives the control signaling from the network device.

Step 330, the terminal device determines, according to a spectrum type corresponding to a carrier related to the control signaling, an interpretation method used to interpret the control signaling.

Alternatively, the control signaling comprises multiple information fields, wherein each information field comprises several bits, and each information field corresponds to different indication content. Examples are: The information field "antenna port" is used to indicate an antenna port used by the terminal device when transmitting data; and the information field "format indication" is used to indicate the format of this control signaling.

Alternatively, the interpretation method is a method for the terminal device to determine the indication content corresponding to the information field in the control signaling. After receiving the control signaling, the terminal device needs to determine a division method for information fields in the control signaling, and a meaning represented by the bit information of each information field. That is, the control signaling needs to be interpreted according to the interpretation method. The interpretation method comprises a division method for at least one information field, and a meaning represented by the bit information.

Different spectrum types correspond to different interpretation methods. Examples are: The first spectrum type corresponds to the first interpretation method, the second spectrum type corresponds to the second interpretation method, and the third spectrum type corresponds to the third interpretation method. Alternatively, in different interpretation methods, the existence of at least one information field is different, and/or the number of bits in at least one information field is different.

Exemplarily, for the first interpretation method, the control signaling comprises an information field a, and the information field a corresponds to b bits. For the second interpretation method, the control signaling does not comprise the information field a. For the third interpretation method, the control signaling comprises an information field a, and the information field a corresponds to c bits, where b and c are unequal positive integers.

The carrier related to the control signaling refers to: a certain carrier used in the process in which the network device issues the control signaling and the terminal device provides feedback for this control signaling. This carrier is an uplink carrier or a downlink carrier, which is not limited in the embodiments of the present application.

Alternatively, the spectrum types and corresponding interpretation methods thereof are stored in the terminal device in the form of a mapping relationship. After determining a carrier related to the control signaling and acquiring the spectrum type corresponding to this carrier, the terminal device can determine, according to the mapping relationship, the interpretation method to be used.

In summary, in the method provided in this embodiment, after receiving the control signaling, the terminal device can determine, by determining the spectrum type corresponding to the carrier related to the control signaling, the corresponding interpretation method according to the spectrum type in the case where different spectrum types correspond to different interpretation methods, thereby ensuring that the terminal device can determine an accurate interpretation method, so as to achieve the correct interpretation of the control signaling according to this interpretation method.

In an alternative embodiment based on FIG. 3, the spectrum type comprises: unshared spectrum or shared spectrum.

The shared spectrum corresponds to one interpretation method, while the unshared spectrum corresponds to another interpretation method.

Exemplarily, when the control signaling is of a DCI format 0_0 scrambled by a Random Access RNTI (RA-RNTI), in the interpretation method corresponding to the shared spectrum, the DCI format 0_0 comprises an information field (2 bits) indicating the lowest 2 bits of a System Frame Number (SFN), while in the interpretation method corresponding to the shared spectrum, the DCI format 0_0 does not comprise this information field.

Exemplarily, when the control signaling is an uplink grant (UL grant) in a Random Access Response (RAR), the UL grant has a physical uplink shared channel (PUSCH) frequency domain resource scheduling information field. In the interpretation method corresponding to the shared spectrum, the PUSCH frequency domain resource scheduling information field has 12 bits, while in the interpretation method corresponding to the unshared spectrum, the PUSCH frequency domain resource scheduling information field has 14 bits. In the interpretation method corresponding to the shared spectrum, there are also 2 bits in the UL grant for indicating channel access indication information. In the interpretation method corresponding to the unshared spectrum, the UL grant does not comprise channel access indication information.

Alternatively, since the terminal device (or network device) is configured with multiple downlink carriers and/or multiple uplink carriers, the spectrum type comprises: in the case of unshared spectrum or shared spectrum, the carrier related to the control signaling may be any of the following 3 cases:
Case 1: the carrier related to the control signaling is a first downlink carrier.
   The first downlink carrier, being one of the multiple downlink carriers, is a downlink carrier used by the terminal device to receive (or by the network device to send) the control signaling.
Case 2: the carrier related to the control signaling is a first uplink carrier.
   The first uplink carrier is one of the multiple uplink carriers which is an uplink carrier used by the terminal device to send (or by the network device to receive) a first transmission that is an uplink transmission indicated by the control signaling.
Case 3: the carrier related to the control signaling is a second downlink carrier.
   The second downlink carrier, being one of the multiple downlink carriers, is a downlink carrier used by the terminal device to receive (or by the network device to send) a second transmission that is a downlink transmission indicated by the control signaling.

Alternatively, the first downlink carrier and the second downlink carrier are the same or different. That is: the network device sends the control signaling and the second transmission by using the same downlink carrier; or, sends the control signaling and the second transmission by using different downlink carriers.

It should be noted that the above first downlink carrier, second downlink carrier, and first uplink carrier correspond to the same spectrum type; or, at least two of the first downlink carrier, the second downlink carrier, and the first uplink carrier correspond to different spectrum types.

Exemplarily, the first downlink carrier, the second downlink carrier, and the first uplink carrier all correspond to the shared spectrum; or the first downlink carrier and the second downlink carrier correspond to the shared spectrum, while the first uplink carrier corresponds to the unshared spectrum.

### For case 1:

FIG. 4 shows a flowchart of a method for interpreting control signaling provided by an exemplary embodiment of the present application. This method may be performed in the terminal device and the network device as shown in FIG. 2. This method comprises:
Step 410, the network device sends control signaling to the terminal device.

Alternatively, the control signaling includes but is not limited to at least one of: a UL grant in an RAR, a DCI format 0_0, a DCI format 0_1, a DCI format 0_2, a DCI format 1_0, a DCI format 1_1, a DCI format 1_2, and a DCI format 2_3.

Alternatively, the DCI format 0_0, the DCI format 0_1, the DCI format 0_2, the DCI format 1_0, the DCI format 1_1, the DCI format 1_2, and the DCI format 2_3 are scrambled using a Radio Network Temporary Identity (RNTI).

RNTI includes but is not limited to at least one of: a Random Access RNTI (RA-RNTI), a Temporary C-RNTI (TC-RNTI), a Cell RNTI (C-RNTI), a Configured Scheduling RNTI (CS-RNTI), a Modulation and Coding Scheme Cell RNTI (MCS-C-RNTI), a Transmit Power Control Sounding Reference Signal RNTI (TPC-SRS-RNTI), and a message B RNTI (msg-B-RNTI).

The control signaling and RNTI may also be in other manifestations, which are not limited in the embodiments of the present application.

Step 420, the terminal device receives the control signaling.

Step 430, the terminal device determines, according to a spectrum type corresponding to a first downlink carrier, an interpretation method used to interpret the control signaling.

Exemplarily, the network device is configured with n downlink carriers, where n is a positive integer. The network device sends the control signaling by using the downlink carrier a of the n downlink carriers. After receiving the control signaling, the terminal device determines whether the spectrum where the downlink carrier a is located is a shared spectrum or an unshared spectrum. In the case where the spectrum where the downlink carrier a is located is a shared spectrum, the first interpretation method is used to interpret the control signaling; or in the case where the spectrum where the downlink carrier a is located is an unshared spectrum, the second interpretation method is used to interpret the control signaling.

Step 440, the terminal device interprets each information field in the control signaling by using the interpretation method.

Exemplarily, the control signaling comprises m bits, where m is a positive integer. The terminal device interprets the m bits by using the determined interpretation method.

Alternatively, the interpretation process of the terminal device comprises: dividing the m bits into several information fields, determining bit information of each information field, and determining the indications of the network device according to the bit information of each information field.

In summary, in the method provided in this embodiment, the terminal device determines the interpretation method according to the spectrum type corresponding to the first downlink carrier for the network device to send the control signaling, and interprets the control signaling, which is simple and efficient.

### For case 2:

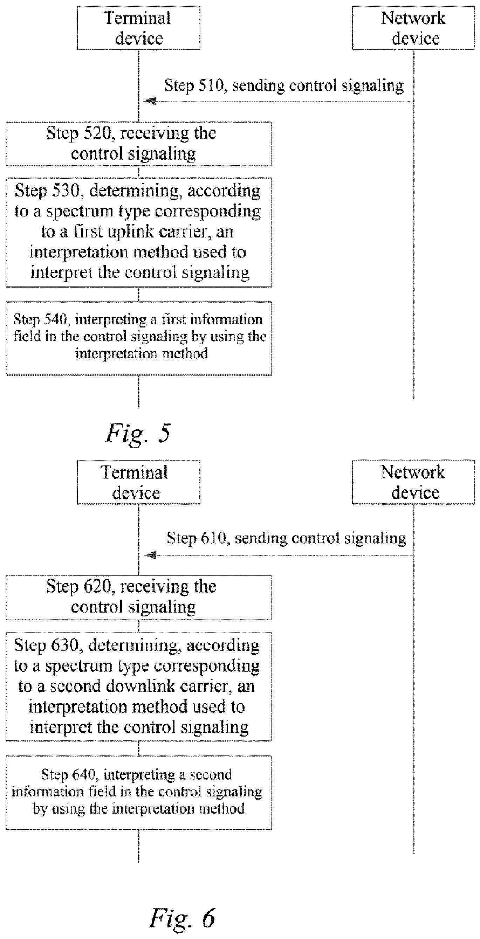

FIG. 5 shows a flowchart of a method for interpreting control signaling provided by an exemplary embodiment of the present application. This method may be performed in the terminal device and the network device as shown in FIG. 2. This method comprises:
Step 510, the network device sends control signaling to the terminal device.

Alternatively, the control signaling includes but is not limited to at least one of: a UL grant in an RAR, a DCI format 0_0, a DCI format 0_1, a DCI format 0_2, a DCI format 1_0, a DCI format 1_1, a DCI format 1_2, and a DCI format 2_3.

Alternatively, the DCI format 0_0, the DCI format 0_1, the DCI format 0_2, the DCI format 1_0, the DCI format 1_1, the DCI format 1_2, and the DCI format 2_3 are scrambled using an RNTI.

RNTI includes but is not limited to at least one of: an RA-RNTI, a TC-RNTI, a C-RNTI, a CS-RNTI, an MCS-C-RNTI, a TPC-SRS-RNTI, and an msg-B-RNTI.

The control signaling and RNTI may also be in other manifestations, which are not limited in the embodiments of the present application.

Step 520, the terminal device receives the control signaling.

Step 530, the terminal device determines, according to a spectrum type corresponding to a first uplink carrier, an interpretation method used to interpret the control signaling.

The first uplink carrier is an uplink carrier used by the terminal device to send a first transmission; and the first transmission comprises an uplink transmission indicated by the control signaling.

Alternatively, the first transmission includes but is not limited to at least one of: a Physical Uplink Shared Channel (PUSCH), a Physical Uplink Control Channel (PUCCH), a Sounding Reference Signal (SRS), and a Physical Random Access Channel (PRACH).

Exemplarily, the control signaling sent by the network device indicates that the terminal device is to send a PUSCH, then the first transmission is the PUSCH.

Alternatively, the first uplink carrier is a UL carrier or an SUL carrier. In one implementation, the control signaling comprises a UL or SUL indication information field. The terminal device determines to select an uplink carrier of the UL carrier type or an uplink carrier of the SUL carrier type as the first uplink carrier according to this information field, for uplink transmission. In another implementation, the terminal device determines to select the UL carrier or the SUL carrier by itself.

Alternatively, the control signaling comprises a carrier indication information field. The terminal device determines the first uplink carrier to be adopted, according to the indication of the carrier indication information field.

Exemplarily, the terminal device is configured with n uplink carriers, where n is a positive integer. After receiving the control signaling, the terminal device uses the uplink carrier c as the first uplink carrier according to the indication of the carrier indication information field, and determines the spectrum type corresponding to the uplink carrier c.

Step 440, the terminal device interprets a first information field in the control signaling by using the interpretation method.

The first information field comprises an information field related to the first transmission in the control signaling. Alternatively, the first information field comprises at least one of: a PUSCH frequency domain resource allocation information field, and a channel access related information field (or a channel access-CPext-CAPC information field).

Exemplarily, the control signaling comprises m bits, where m is a positive integer. The information field related to the first transmission comprises k bits, where k is a positive integer not greater than m. Then, the terminal device interprets the k-bit first information field by using the determined interpretation method.

Exemplarily, with reference to Table I, the DCI format 0-1 (i.e., the control signaling) scrambled using a C-RNTI shown in Table I is used for scheduling uplink transmission.

**Table I: DCI format 0-1**

| Information field | Number of bits |
|---|---|
| Format indication | 1 bit |
| Carrier indication | 0 or 3 bits |
| Downlink feedback information flag | 0 or 1 bit |
| Hybrid Automatic Repeat reQuest (HARQ)-ACK bit map | 16 bits |
| Transmit Power Control (TPC) command for scheduling PUSCH | 2 bits |
| UL or SUL indication | 0 or 1 bit |
| Band Width Part (BWP) indication | 0 to 2 bits |
| Frequency domain resource allocation | Related to the band width and the type of resource allocation |
| Time domain resource allocation | 0 to 6 bits |
| Frequency hopping flag | 0 or 1 bit |
| Modulation and coding scheme | 5 bits |
| New data indication | 1 to 8 bits |
| Redundancy version | 2 to 8 bits |
| HARQ process number | 4 bits |
| First downlink allocation index | 1, 2 or 4 bits |
| Second downlink allocation index | 0, 2 or 4 bits |
| SRS resource indication | Related to the configured SRS resource |
| Precoding information | 0 to 6 bits |
| Antenna port | 2 to 5 bits |
| SRS request | 2 bits |
| Channel State Information (CSI) request | 0 to 6 bits |
| Code Block Group Transmission Information (CBGTI) | 0, 2, 4 or 6 bits |
| Demodulation Reference Signals (DMRS) sequence initialization | 0 or 1 bit |
| Associated with Phase-Tracking Reference Signals (PTRS) and Demodulation Reference Signals (DMRS) | 0 or 2 bits |
| Beta shift | 0 or 2 bits |
| UpLink -Shared Channel (UL-SCH) indication | 0 or 1 bit |
| Channel Access-CPext-CAPC | 0 to 6 bits |
| Open loop power control parameter setting indication | 0 to 2 bits |
| Priority indication | 0 or 1 bit |
| Invalid symbol mode indication | 0 or 1 bit |
| Minimum applicable scheduling shift amount indication | 0 or 1 bit |
| Primary cell sleep indication | 0 to 5 bits |

The channel access-CPext-CAPC information field in the above DCI format 0-1 is related to the first transmission, then the terminal device determines the above information field as the first information field, and interprets the first information field by using the determined interpretation method. Specifically, in the case where the first uplink carrier is in a shared spectrum, the first information field is valid and is 0 to 6 bits; and in the case where the first uplink carrier is in a unshared spectrum, the first information field does not exist.

Alternatively, the carrier indication information field in the above DCI format 0-1 is used to determine the first uplink carrier, and the UL or SUL indication is used to determine that the first transmission is on the UL carrier or the SUL carrier.

Exemplarily, refer to Table II in combination.

**Table II: UL grant carried in RAR**

| Information field | Number of bits |
|---|---|
| Frequency hopping flag | 1 bit |
| PUSCH frequency domain resource allocation | 14 bits, unshared spectrum 12 bits, shared spectrum |
| Modulation and coding scheme | 4 bits |
| TPC for PUSCH | 4 bits |
| CSI request | 1 bit |
| Channel Access-CPext-CAPC | 0 bits, unshared spectrum 2 bits, shared spectrum |

The first transmission is a PUSCH, and the first transmission may be carried on the UL carrier or the SUL carrier. If the UL carrier is in the shared spectrum, the SUL carrier is in the unshared spectrum. When the PUSCH is transmitted on the UL carrier, the terminal device interprets that the PUSCH frequency domain resource allocation information field is 12 bits, and the channel access-CPext-CAPC information field is valid and is 2 bits. When the PUSCH is transmitted on the SUL carrier, the terminal device interprets that the PUSCH frequency domain resource allocation information field is 14 bits, and the channel access-CPext-CAPC information field does not exist.

In summary, in the method provided in this embodiment, the terminal device determines the interpretation method according to the spectrum type corresponding to the first uplink carrier, wherein the first uplink carrier is the uplink carrier used by the terminal device to send the first transmission, and the terminal device then interprets the first information field related to the first transmission in the control signaling according to the interpretation method, which is simple and efficient.

### For case 3:

FIG. 6 shows a flowchart of a method for interpreting control signaling provided by an exemplary embodiment of the present application. This method may be performed in the terminal device and the network device as shown in FIG. 2. This method comprises:
Step 610, the network device sends control signaling to the terminal device.

Alternatively, the control signaling includes but is not limited to at least one of: a UL grant in an RAR, a DCI format 0_0, a DCI format 0_1, a DCI format 0_2, a DCI format 1_0, a DCI format 1_1, a DCI format 1_2, and a DCI format 2_3.

Alternatively, the DCI format 0_0, the DCI format 0_1, the DCI format 0_2, the DCI format 1_0, the DCI format 1_1, the DCI format 1_2, and the DCI format 2_3 are scrambled using an RNTI.

RNTI includes but is not limited to at least one of: an RA-RNTI, a TC-RNTI, a C-RNTI, a CS-RNTI, an MCS-C-RNTI, a TPC-SRS-RNTI, and an msg-B-RNTI.

The control signaling and RNTI may also be in other manifestations, which are not limited in the embodiments of the present application.

Step 620, the terminal device receives the control signaling.

Step 630, the terminal device determines, according to a spectrum type corresponding to a second downlink carrier, an interpretation method used to interpret the control signaling.

The second downlink carrier is the downlink carrier used by the terminal device to receive the second transmission; and the second transmission comprises a downlink transmission indicated by the control signaling.

Alternatively, the second transmission includes but is not limited to at least one of: a Physical Downlink Shared Channel (PDSCH), a Physical Downlink Control Channel (PDCCH), and CSI Reference Signals (CSI-RS).

Exemplarily, the control signaling sent by the network device indicates that the terminal device is to receive the PDSCH, then the second transmission is the PDSCH.

Alternatively, the control signaling comprises a carrier indication information field. The terminal device determines the second downlink carrier to be adopted, according to the indication of the carrier indication information field.

Exemplarily, the terminal device is configured with n downlink carriers, where n is a positive integer. After receiving the control signaling, the terminal device uses the downlink carrier d as the second downlink carrier according to the indication of the carrier indication information field, and determines the spectrum type corresponding to the downlink carrier d.

Step 640, the terminal device interprets a second information field in the control signaling by using the interpretation method.

The second information field comprises an information field related to the second transmission in the control signaling. Alternatively, the second information field comprises at least one of: a system frame number related information field.

Exemplarily, the control signaling comprises m bits, where m is a positive integer. The information field related to the second transmission comprises p bits, where p is a positive integer not greater than m. Then, the terminal device interprets the p-bit second information field by using the determined interpretation method.

Exemplarily, with reference to Table III, the DCI format 1-0 (i.e., the control signaling) scrambled using an RA-RNTI shown in Table III is used for scheduling downlink transmission.

**Table III: DCI format 1-0**

| Information field | Number of bits |
|---|---|
| Frequency domain resource allocation | Related to the band width and the type of resource allocation |
| Time domain resource allocation | 0 to 4 bits |
| Mapping from Virtual Resource Blocks (VRB) to Physical Resource Blocks (PRB) | 0 or 1 bit |
| Modulation and coding scheme | 5 bits |
| Transport Block (TB) SCALING | 2 bits |
| Least Significant Bit (LSB) of System Frame Number | 2 bits |
| Reserved bits | 14 bits |

The least significant bit of system frame number (LSB of SFN) information field in the above DCI format 1-0 is related to the second transmission, and the terminal device determines the above information field as the second information field, and interprets the second information field by using the determined interpretation method. Specifically, in the case where the second downlink carrier is in a shared spectrum, the second information field is valid and is 2 bits; and in the case where the second downlink carrier is in an unshared spectrum, the second information field does not exist. In summary, in the method provided in this embodiment, the terminal device determines the interpretation method according to the spectrum type corresponding to the second downlink carrier, wherein the second downlink carrier is the downlink carrier used by the terminal device to receive the second transmission, and the terminal device then interprets the second information field related to the second transmission in the control signaling according to the interpretation method, which is simple and efficient.

It should be noted that the above embodiments may be implemented separately or in combination, and the embodiments of the present application do not limit this.

It should be noted that the steps corresponding to the terminal device side in the foregoing embodiments may be implemented separately, and the steps corresponding to the network device side in the foregoing embodiments may also be implemented separately.

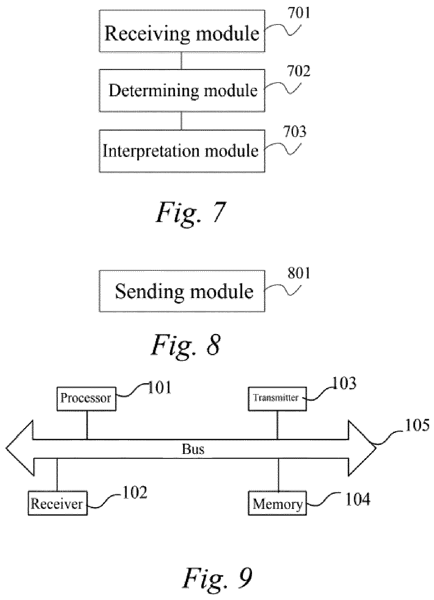

FIG. 7 shows a structural block diagram of an apparatus for interpreting control signaling provided by an exemplary embodiment of the present application. This apparatus may be implemented as a terminal device or as a part of a terminal device. The apparatus comprises: a receiving module 701 and a determining module 702,
the receiving module 701 being configured to receive control signaling from a network device; and
the determining module 702 being configured to determine, according to a spectrum type corresponding to a carrier related to the control signaling, an interpretation method used to interpret the control signaling.

Alternatively, this apparatus further comprises an interpretation module 703.

In an alternative embodiment, the spectrum type corresponding to the carrier related to the control signaling comprises: unshared spectrum or shared spectrum.

In an alternative embodiment, the terminal device is configured with multiple downlink carriers and/or multiple uplink carriers, a first downlink carrier, being one of the multiple downlink carriers, is a downlink carrier used by the terminal device to receive the control signaling; a second downlink carrier, being one of the multiple downlink carriers, is a downlink carrier used by the terminal device to receive a second transmission comprising a downlink transmission indicated by the control signaling; and a first uplink carrier, being one of the multiple uplink carriers, is an uplink carrier used by the terminal device to send a first transmission comprising an uplink transmission indicated by the control signaling, wherein, the first downlink carrier, the second downlink carrier, and the first uplink carrier correspond to the same spectrum type; or, at least two of the first downlink carrier, the second downlink carrier, and the first uplink carrier correspond to different spectrum types.

In an alternative embodiment, the carrier related to the control signaling is a first downlink carrier that is a downlink carrier used by the terminal device to receive the control signaling.

In an alternative embodiment, the interpretation module 703 is configured to interpret each information field in the control signaling by using the interpretation method.

In an alternative embodiment, the carrier related to the control signaling is a first uplink carrier, wherein the first uplink carrier is an uplink carrier used by the terminal device to send a first transmission comprising an uplink transmission indicated by the control signaling.

In an alternative embodiment, the interpretation module 703 is configured to interpret a first information field in the control signaling by using the interpretation method, wherein the first information field comprises an information field related to the first transmission in the control signaling.

In an alternative embodiment, the first information field comprises at least one of: a PUSCH frequency domain resource allocation information field, and a channel access related information field.

In an alternative embodiment, the carrier related to the control signaling is a second downlink carrier, wherein the second downlink carrier is a downlink carrier used by the terminal device to receive a second transmission comprising a downlink transmission indicated by the control signaling.

In an alternative embodiment, the interpretation module 703 is configured to interpret a second information field in the control signaling by using the interpretation method, wherein the second information field comprises an information field related to the second transmission in the control signaling.

In an alternative embodiment, the second information field comprises at least one of: an information field related to a system frame number.

In an alternative embodiment, the first transmission comprises at least one of: a PUSCH, a PUCCH, an SRS, and a PRACH.

In an alternative embodiment, the second transmission comprises at least one of: a PDSCH, a PDCCH, and a CSI-RS.

In an alternative embodiment, the control signaling comprises at least one of: a UL grant in an RAR, a DCI format 0_0, a DCI format 0_1, a DCI format 0_2, a DCI format 1_0, a DCI format 1_1, a DCI format 1_2, and a DCI format 2_3.

In an alternative embodiment, the scrambling codes of the DCI format 0_0, the DCI format 0_1, the DCI format 0_2, the DCI format 1_0, the DCI format 1_1, the DCI format 1_2, and the DCI format 2_3 comprise at least one of: an RA-RNTI, a TC-RNTI, a C-RNTI, a CS-RNTI, an MCS-C-RNTI, a TPC-SRS-RNTI, and an msg-B-RNTI.

FIG. 8 shows a structural block diagram of an apparatus for interpreting control signaling provided by an exemplary embodiment of the present application. This apparatus may be implemented as a network device or as a part of a network device. The apparatus comprises: a sending module 801,
the sending module 801 being configured to send control signaling to a terminal device,
wherein the terminal device determines, according to a spectrum type corresponding to a carrier related to the control signaling, an interpretation method used to interpret the control signaling.

In an alternative embodiment, the spectrum type comprises: unshared spectrum or shared spectrum.

In an alternative embodiment, the network device is configured with multiple downlink carriers and/or multiple uplink carriers, a first downlink carrier, being one of the multiple downlink carriers, is a downlink carrier used by the network device to send the control signaling; a second downlink carrier, being one of the multiple downlink carriers, is a downlink carrier used by the network device to send a second transmission comprising a downlink transmission indicated by the control signaling; and a first uplink carrier, being one of the multiple uplink carriers, is an uplink carrier used by the network device to receive a first transmission comprising an uplink transmission indicated by the control signaling, wherein, the first downlink carrier, the second downlink carrier, and the first uplink carrier correspond to the same spectrum type; or, at least two of the first downlink carrier, the second downlink carrier, and the first uplink carrier correspond to different spectrum types.

In an alternative embodiment, the carrier related to the control signaling is a first downlink carrier that is a downlink carrier used by the network device to send the control signaling.

In an alternative embodiment, the interpretation method is used by the terminal device to interpret each information field in the control signaling.

In an alternative embodiment, the carrier related to the control signaling is a first uplink carrier, wherein the first uplink carrier is an uplink carrier used by the network device to receive a first transmission comprising an uplink transmission indicated by the control signaling.

In an alternative embodiment, the interpretation method is used by the terminal device to interpret a first information field in the control signaling, wherein the first information field comprises an information field related to the first transmission in the control signaling.

In an alternative embodiment, the first information field comprises at least one of: a PUSCH frequency domain resource allocation information field, and a channel access related information field.

In an alternative embodiment, the carrier related to the control signaling is a second downlink carrier, wherein the second downlink carrier is a downlink carrier used by the network device to send a second transmission comprising a downlink transmission indicated by the control signaling.

In an alternative embodiment, the interpretation method is used by the terminal device to interpret a second information field in the control signaling, wherein the second information field comprises an information field related to the second transmission in the control signaling.

In an alternative embodiment, the second information field comprises at least one of: a system frame number related information field.

In an alternative embodiment, the first transmission comprises at least one of: a PUSCH, a PUCCH, an SRS, and a PRACH.

In an alternative embodiment, the second transmission comprises at least one of: a PDSCH, a PDCCH, and a CSI-RS.

In an alternative embodiment, the control signaling comprises at least one of: a UL grant in an RAR, a DCI format 0_0, a DCI format 0_1, a DCI format 0_2, a DCI format 1_0, a DCI format 1_1, a DCI format 1_2, and a DCI format 2_3.

In an alternative embodiment, the scrambling codes of the DCI format 0_0, the DCI format 0_1, the DCI format 0_2, the DCI format 1_0, the DCI format 1_1, the DCI format 1_2, and the DCI format 2_3 comprise at least one of: an RA-RNTI, a TC-RNTI, a C-RNTI, a CS-RNTI, an MCS-C-RNTI, a TPC-SRS-RNTI, and an msg-B-RNTI.

It should be noted that: when the apparatus provided in the above embodiments implements its function, it is only exemplified by the division of the above functional modules. In practical applications, the above functions can be allocated to different functional modules according to requirements, that is, the internal structure of the device is divided into different functional modules to complete all or some of the functions described above. In addition, the apparatus and method embodiments provided in the above embodiments belong to the same concept. For the specific implementation process, reference may be made to the method embodiments, and details are not described here again.

FIG. 9 shows a schematic structural diagram of a communication device (a terminal device or a network device) provided by an exemplary embodiment of the present application. This communication device comprises: a processor 101, a receiver 102, a transmitter 103, a memory 104, and a bus 105.

The processor 101 comprises one or more processing cores. The processor 101 executes various functional applications and information processing by running software programs and modules.

The receiver 102 and the transmitter 103 may be implemented as one communication component which may be a communication chip.

The memory 104 is connected to the processor 101 via the bus 105.

The memory 104 may be used to store at least one instruction, and the processor 101 is used to execute the at least one instruction to implement the steps in the foregoing method embodiments.

In addition, the memory 104 may be implemented by any type of volatile or non-volatile storage device or a combination thereof, and the volatile or non-volatile storage device includes but is not limited to: a magnetic disk or an optical disk, an Erasable Programmable Read Only Memory (EEPROM), an Erasable Programmable Read Only Memory (EPROM), a Static Random Access Memory, (SRAM), a Read-Only Memory (ROM), a magnetic memory, a flash memory, a Programmable Read-Only Memory (PROM).

In an exemplary embodiment, a computer-readable storage medium is further provided, wherein the computer-readable storage medium stores at least one instruction, at least one segment of program, a code set, or an instruction set, the at least one instruction, the at least one segment of program, the code set, or the instruction set is loaded and executed by the processor to implement the method for interpreting control signaling which is provided by the foregoing method embodiments and performed by the communication device.

Those skilled in the art can understand that all or some of the steps in the above embodiments can be completed either by hardware, or by a program instructing related hardware. The program may be stored in a computer-readable storage medium. The above-mentioned storage medium may be a read-only memory, a magnetic disk or an optical disk, etc.

The above descriptions merely relate to alternative embodiments of the present application, and are not intended to limit the present application. Any modifications, equivalent replacements, improvements, etc. made within the spirit and principles of the present application should be included within the scope of protection of the present application.

## Claims

1. A method for interpreting control signaling, wherein the method is performed in a terminal device, and the method comprises:
receiving control signaling from a network device; and
determining, according to a spectrum type corresponding to a carrier related to the control signaling, an interpretation method used to interpret the control signaling.

2. The method according to claim 1, wherein the spectrum type comprises: unshared spectrum or shared spectrum.

3. The method according to claim 1, wherein the terminal device is configured with multiple downlink carriers and/or multiple uplink carriers,
a first downlink carrier, being one of the multiple downlink carriers, is a downlink carrier used by the terminal device to receive the control signaling;
a second downlink carrier, being one of the multiple downlink carriers, is a downlink carrier used by the terminal device to receive a second transmission comprising a downlink transmission indicated by the control signaling; and
a first uplink carrier, being one of the multiple uplink carriers, is an uplink carrier used by the terminal device to send a first transmission comprising an uplink transmission indicated by the control signaling,
wherein, the first downlink carrier, the second downlink carrier, and the first uplink carrier correspond to the same spectrum type; or, at least two of the first downlink carrier, the second downlink carrier, and the first uplink carrier correspond to different spectrum types.

4. The method according to any one of claims 1 to 3, wherein
the carrier related to the control signaling is a first downlink carrier that is a downlink carrier used by the terminal device to receive the control signaling.

5. The method according to claim 4, wherein after said determining, according to a spectrum type corresponding to a carrier related to the control signaling, an interpretation method used to interpret the control signaling, the method further comprises:
interpreting each information field in the control signaling by using the interpretation method.

6. The method according to any one of claims 1 to 3, wherein
the carrier related to the control signaling is a first uplink carrier,
wherein the first uplink carrier is an uplink carrier used by the terminal device to send a first transmission comprising an uplink transmission indicated by the control signaling.

7. The method according to claim 6, wherein after said determining, according to a spectrum type corresponding to a carrier related to the control signaling, an interpretation method used to interpret the control signaling, the method further comprises:
interpreting a first information field in the control signaling by using the interpretation method,
wherein the first information field comprises an information field related to the first transmission in the control signaling.

8. The method according to claim 7, wherein the first information field comprises at least one of:
a physical uplink shared channel (PUSCH) frequency domain resource allocation information field, and a channel access related information field.

9. The method according to any one of claims 1 to 3, wherein
the carrier related to the control signaling is a second downlink carrier,
wherein the second downlink carrier is a downlink carrier used by the terminal device to receive a second transmission comprising a downlink transmission indicated by the control signaling.

10. The method according to claim 9, wherein after said determining, according to a spectrum type corresponding to a carrier related to the control signaling, an interpretation method used to interpret the control signaling, the method further comprises:
interpreting a second information field in the control signaling by using the interpretation method,
wherein the second information field comprises an information field related to the second transmission in the control signaling.

11. The method according to claim 10, wherein the second information field comprises at least one of:
a system frame number related information field.

12. The method according to any one of claims 6 to 8, wherein the first transmission comprises at least one of:
a PUSCH, a physical uplink control channel (PUCCH), a sounding reference signal (SRS), and a physical random access channel (PRACH).

13. The method according to any one of claims 9 to 11, wherein the second transmission comprises at least one of:
a physical downlink shared channel (PDSCH), a physical downlink control channel (PDCCH), and a CSI reference signal (CSI-RS).

14. The method according to any one of claims 1 to 13, wherein the control signaling comprises at least one of:
an uplink grant (UL grant) in a random access response (RAR), a DCI format 0_0, a DCI format 0_1, a DCI format 0_2, a DCI format 1_0, a DCI format 1_1, a DCI format 1_2, and a DCI format 2_3.

15. The method according to claim 14, wherein scrambling codes of the DCI format 0_0, the DCI format 0_1, the DCI format 0_2, the DCI format 1_0, the DCI format 1_1, the DCI format 1_2, and the DCI format 2_3 comprise at least one of:
a random access RNTI (RA-RNTI), a temporary C-RNTI (TC-RNTI), a cell RNTI (C-RNTI), a configured scheduling RNTI (CS-RNTI), a modulation and coding scheme cell RNTI (MCS-C-RNTI), a transmit power control sounding reference signal RNTI (TPC-SRS-RNTI), and a message B RNTI (msg-B-RNTI).
